# EUROPÄISCHE PATENTSCHRIFT

(11) **EP 1 024 990 B1**
(45) Veröffentlichungstag und Bekanntmachung des Hinweises auf die Patenterteilung: **07.01.2004**
(21) Anmeldenummer: 98956879.5
(22) Anmeldetag: 27.10.1998
(51) Int. Cl.: B62D 6/10, G01L 3/10, B62D 15/02, G01L 5/22, G01L 5/10

(54) **ELEKTRISCH UNTERSTÜTZTE HILFSKRAFTLENKUNG FÜR KRAFTFAHRZEUGE**
ELECTRICALLY ASSISTED AUTOMOTIVE POWER STEERING SYSTEM
SERVO-DIRECTION ASSISTEE ELECTRIQUEMENT POUR VEHICULES A MOTEUR

(30) Priorität: 29.10.1997 DE 19747638
(43) Veröffentlichungstag der Anmeldung: 09.08.2000
(73) Patentinhaber: ZF FRIEDRICHSHAFEN Aktiengesellschaft, 88038 Friedrichshafen (DE)
(72) Erfinder: BRENNER, Peter, D-73563 Mögglingen (DE); BUDAKER, Martin, D-73540 Heubach (DE); NAGEL, Willi, D-71691 Freiberg (DE); LOREIT, Uwe, D-35580 Wetzlar (DE)
(74) Vertreter: Schultenkämper, Johannes
(86) Internationale Anmeldenummer: PCT/EP1998/006813
(87) Internationale Veröffentlichungsnummer: WO 1999/021747

(56) Entgegenhaltungen:
- DE-A- 3 821 083

## Beschreibung

Die Erfindung betrifft eine elektrisch unterstützte Hilfskraftlenkung für Kraftfahrzeuge nach dem Oberbegriff des Anspruches 1. Die Hilfskraftlenkung enthält eine Eingangswelle, die mit einem Lenkhandrad in Wirkverbindung steht und die zur Übertragung eines für das Lenken von zu lenkenden Rädern erforderlichen Drehmomentes dient. Ein Ausgangsglied steht mit den zu lenkenden Rädern in Wirkverbindung. Ein Servomotor, durch den eine Hilfskraft auf die Eingangswelle oder das Ausgangsglied ausgeübt werden kann, ist an der Hilfskraftlenkung angeordnet. Die Eingangswelle und das Ausgangsglied sind über ein drehelastisches Glied derart miteinander verbunden, daß zwischen der Eingangswelle und dem Ausgangsglied eine begrenzte Verdrehbewegung möglich ist. Zum kontaktfreien Erfassen der Richtung und der Stärke eines auf die Eingangswelle wirkenden Lenkdrehmomentes dient eine berührungsfreie Erfassungseinheit. Die Erfassungseinheit umfaßt je einen mit der Eingangswelle und dem Ausgangsglied verbundenen Impulsgeber und einen Sensor. Die Impulsgeber sind als Magnetringe ausgebildet, die an ihren Umfangsflächen mit magnetischen Nord- und Südpolen in abwechselnder Reihenfolge versehen sind.

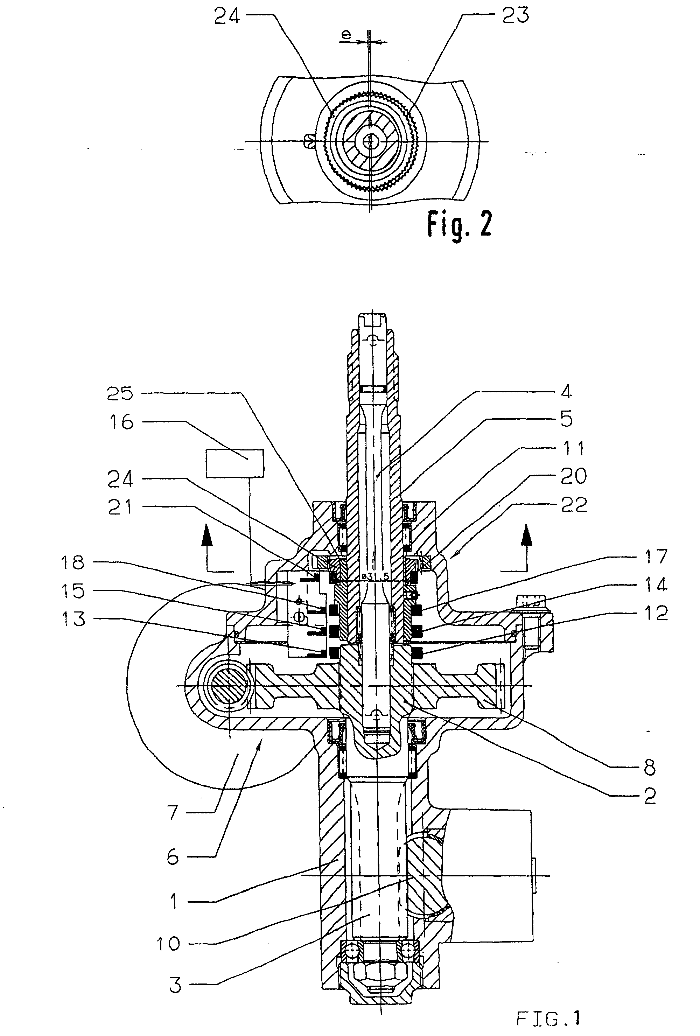

Eine solche Hilfskraftlenkung ist bereits aus der DE-A1-38 21 083 bekannt. Dort wird insbesondere anhand der Figuren 1 und 2 eine elektrisch unterstützte Hilfskraftlenkung für Kraftfahrzeuge beschrieben, die eine Eingangswelle ("Lenkwelle 3") aufweist, welche mit einem Lenkhandrad in Wirkverbindung steht, zur Übertragung eines für das Lenken von zu lenkenden Rädern erforderlichen Lenkdrehmomentes. Außerdem ist dort ein Ausgangsglied ("angetriebene Welle Außerdem ist dort ein Ausgangsglied ("angetriebene Welle 6") beschrieben, das mit den zu lenkenden Rädern in Wirkverbindung steht, sowie ein Servomotor, durch den eine Hilfskraft auf die Eingangswelle oder das Ausgangsglied ausgeübt werden kann. Dabei sind die Eingangswelle ("Lenkwelle 3") und das Ausgangsglied ("angetriebene Welle 6") über ein drehelastisches Glied ("Drehstab 15") derart miteinander verbunden sind, daß zwischen der Eingangswelle und dem Ausgangsglied eine begrenzte Verdrehbewegung möglich ist. Weiterhin ist dort eine Erfassungseinheit (bestehend aus "Trommeln 11 und 12" sowie "magnetischem Sensor MS") vorgesehen zum kontaktfreien Erfassen der Richtung und der Stärke eines auf die Eingangswelle ("Lenkwelle 3") wirkenden Lenkdrehmomentes. Die dortige Erfassungseinheit umfaßt je einen mit der Eingangswelle und dem Ausgangsglied verbundenen Impulsgeber ("Trommeln 11 und 12") und einen Sensor ("magnetischen Sensor MS"), wobei die Impulsgeber als Magnetringe (12, 14) ausgebildet sind, die an ihren Umfangsflächen mit magnetischen Nord- und Südpolen in abwechselnder Reihenfolge versehen sind (s. dort Fig. 2). An der dortigen Eingangswelle ist auch ein zweiter Magnetring (s. Fig. 2) angeordnet ist, wobei den Sensoren eine Elektronik-Einheit ("arithmetische Schaltung 16" in dortiger Fig. 1) zugeordnet ist.

Eine weitere Hilfskraftlenkung ist beispielsweise bekannt aus der DE-C2-38 44 578. Bei dieser Hilfskraftlenkung sind zwei Trommeln aus nichtmagnetischem Material mit einer Eingangswelle bzw. mit einem Ausgangsglied verbunden. Die Trommeln sind auf ihrem Umfang derart mit magnetisierbaren Medien versehen, daß sie abwechselnd magnetische Nord- und Südpole bilden. Durch Messen der Differenz der Drehwinkel der beiden Trommeln wird unter Verwendung von magnetoresistiven Elementen das Drehmoment erfaßt.

Über die Erfassung des Drehmomentes kann man die Servounterstützung einer Elektrolenkung regeln. Regelt man die Servounterstützung bei einer Elektrolenkung rein drehmomentabhängig, so wird dies im Fahrbetrieb als ungewohnt empfunden, da dann andere Reibungsverhältnisse bestehen als bei einer hydraulisch unterstützten Hilfskraftlenkung. Die "Rückmeldung" der Lenkgeschwindigkeit auf das Lenkmoment fehlt. Um diesen Nachteil auszugleichen, ist eine Erfassung der Lenkgeschwindigkeit notwendig. Für die Erfassung der Lenkgeschwindigkeit wird bei bekannten Elektrolenkungen, beispielsweise in der DE-C2-37 11 854, ein zusätzlicher Sensor vorgesehen. Dieser Sensor weist beispielsweise einen Gleichstrom-Tachogenerator auf, der einen Gleichstrom mit einer an die Lenkgeschwindigkeit angepaßten Spannung erzeugt. Ein derartiger Lenkgeschwindigkeitssensor bedeutet einen relativ großen Aufwand für die Erfassung der Lenkgeschwindigkeit.

Der Erfindung liegt die Aufgabe zugrunde, die Regelung einer gattungsgemäßen, elektrisch unterstützten Hilfskraftlenkung zu verbessern. Insbesondere soll es möglich sein, zusätzlich die Lenkgeschwindigkeit mit einfachen Mitteln zu erfassen.

Diese Aufgabe wird durch die im Anspruch 1 gekennzeichnete Hilfskraftlenkung gelöst. Die Lösung erfolgt insbesondere dadurch, daß bei einer gattungsgemäßen Hilfskraftlenkung die beiden Magnetringe mit gleichen Anzahlen von Polpaaren ausgestattet werden und daß jedem Magnetring ein gehäusefester Sensor zugeordnet wird, durch den sowohl die relative Lage der Magnetringe und damit die relative Lage der Eingangswelle und des Ausgangsgliedes zueinander als auch die Drehgeschwindigkeit der Eingangswelle erfaßt werden. Durch diese Ausführung ist es möglich, daß mit zwei Magnetringen und zwei den Magnetringen zugeordneten Sensoren sowohl das Drehmoment als auch die Drehgeschwindigkeit der Eingangswelle und damit die Lenkgeschwindigkeit erfaßt werden können. Über die Erfassung der Lenkgeschwindigkeit kann die Dämpfung der Lenkung beim Einlenken und beim Rücklauf gesteuert werden. Bei Verwendung eines Elektromotors als Servomotor kann die Lenkgeschwindigkeit auch als zusätzliche Regelgröße für die Regelung der Motordrehzahl verwendet werden und hier zu einer besseren Regelgüte führen.

Außerdem ist an der Eingangswelle ein zweiter Magnetring mit einem zugehörigen zweiten Sensor angeordnet sein, der zur Erfassung des Lenkwinkels dient. Mit der Erfassung des Lenkwinkels kann der Rücklauf der Lenkung aktiv beeinflußt werden. Außerdem ist dadurch eine Mittendämpfung zum Unterdrücken von Überschwingern beim Rücklauf möglich. Außerdem wird der Geradeauslauf des Kraftfahrzeugs verbessert.

Weitere Vorteile sind eine genaue Zentrierung auf die Geradeausfahrtstellung der Lenkung und die Möglichkeit einer Kennliniengestaltung in Abhängigkeit vom Lenkeinschlag. Dies bedeutet, daß in Geradeausfahrtstellung eine andere Kennlinie als im Parkierbereich vorliegt. Außerdem kann das Lenkwinkelsignal für weitere Fahrzeugsteuergeräte, wie beispielsweise ein aktives Fahrwerk oder eine Wankstabilisierung, herangezogen werden.

Die beiden Magnetringe, die an der Eingangswelle angeordnet sind, weisen zweckmäßigerweise unterschiedliche Anzahlen von Polpaaren auf. Mit den beiden Magnetringen und den beiden zugeordneten Sensoren ist eine eindeutige Lenkwinkelbestimmung bestenfalls nur im Bereich von 180° möglich. Soll die absolute Winkelstellung der Eingangswelle bestimmt werden, so wird den beiden Sensoren eine Elektronik-Einheit zugeordnet, durch die nach einmaliger Bestimmung der Geradeausfahrtstellung der jeweils zurückgelegte Lenkwinkel erfaßt und gespeichert werden kann. Um zu verhindern, daß bei auftretenden Fehlern, beispielsweise bei einem Stromausfall, der absolute Lenkwinkel verlorengeht, kann ein dritter Magnetring mit einem zugehörigen dritten Sensor an der Eingangswelle zur Erfassung des absoluten Lenkwinkels angeordnet werden. Der dritte Magnetring ist mit der Eingangswelle zweckmäßigerweise über ein Untersetzungsgetriebe verbunden, das beispielsweise nach der Art eines "Harmonic Drive"-Getriebes ausgeführt ist.

Im folgenden wird die Erfindung anhand eines in der Zeichnung dargestellten Ausführungsbeispieles näher erläutert.
Es zeigen:
- Fig. 1: einen Längsschnitt durch die erfindungsgemäße Hilfskraftlenkung am Beispiel einer Zahnstangenlenkung;
- Fig. 2: den Querschnitt gemäß der Linie II-II in Fig. 1.

Die Erfindung wird am Beispiel einer Hilfskraftlenkung mit einem Zahnstangengetriebe erläutert. Mit gleicher Wirkung kann die Erfindung jedoch auch auf andere Hilfskraftlenkungen, beispielsweise solche mit Kugelmuttergetrieben oder mit einer von dem Lenkgetriebe geteilten Lenksäule, angewendet werden.

In einem Lenkgehäuse, kurz als Gehäuse 1 bezeichnet, ist ein mit einer Ritzelwelle 2 verbundenes Ritzel 3 drehbar gelagert. Das Ritzel 3 stellt ein Ausgangsglied dar, das mit nicht dargestellten, zu lenkenden Rädern in Wirkverbindung steht. Anstelle des Ritzels 3 steht bei einer Kugelmutterlenkung eine Gewindespindel. Die Ritzelwelle 2 ist über einen Drehstab 4 mit einer Eingangswelle 5 des Lenkgetriebes verbunden. Anstelle des Drehstabs 4 kann ein anderes drehelastisches Glied verwendet werden.

Das Ritzel 3 steht über ein Zahnrad- oder Schneckengetriebe 6 in trieblicher Verbindung mit einem Elektromotor 7. Auf der Ritzelwelle 2 ist ein Schneckenrad 8 des Schneckengetriebes 6 befestigt. Das Ritzel 2 steht außerdem über eine Zahnstange 10 mit den zu lenkenden Rädern in trieblicher Verbindung.

An einem Teil des Gehäuses 1, in dem Ausführungsbeispiel nach Fig. 1 in dem oberen, der Eingangswelle 4 benachbarten Teil, ist ein Sensorgehäuse 11 befestigt.

Auf der Ritzelwelle 2 ist ein Impulsgeber in der Form eines Magnetringes 12 angeordnet. Der Magnetring 12 wirkt zusammen mit einem Sensor 13, der in dem Sensorgehäuse 11 gehalten ist. Auf der Eingangswelle 5 ist ein erster Impulsgeber in der Form eines Magnetrings 14 benachbart zu dem Magnetring 12 befestigt. Ein zugehöriger Sensor 15 ist in dem Sensorgehäuse 11 gehalten. Die beiden Magnetringe 12 und 14 sind an ihren Umfangsflächen in abwechselnder Reihenfolge mit magnetischen Nord- und Südpolen versehen. Beide Magnetringe 12 und 14 weisen die gleiche Anzahl von Polpaaren auf.

Die Signale der beiden Sensoren 13 und 14 werden in einer Elektronik-Einheit 16 erfaßt und verarbeitet. Dabei wird über die relative Lage der beiden Magnetringe 12 und 14 zueinander das Drehmoment erfaßt. Ein über das Lenkhandrad auf die Eingangswelle 5 eingeleitetes Drehmoment wird über den Drehstab 4 auf die Ritzelwelle 2 übertragen. Dabei kommt es, abhängig vom Drehmoment und von der Federkennlinie des Drehstabes 4, zu einer relativen Verdrehung der Eingangswelle 5 zu der Ritzelwelle 2 und somit zu einer Verdrehung des Magnetringes 14 gegenüber dem Magnetring 12. Der Verdrehwinkel der Magnetringe 12 und 14 zueinander ist also bei gegebenem Drehstab 4 abhängig von dem Betätigungsmoment an dem Lenkhandrad. Das gemessene Drehmoment dient als Meßgröße für die Servounterstützung und wird von der Elektronikeinheit 16 an den Elektromotor 7 weitergeleitet.

Neben dem Lenkdrehmoment kann die Drehgeschwindigkeit der Eingangswelle 5 durch die beiden Magnetringe 12 und 14 und die beiden Sensoren 13 und 15 erfaßt werden. Durch Messung der abgetasteten Pole der Magnetringe und deren Ableitung über die Zeit kann die Drehgeschwindigkeit errechnet werden. Werden zusätzlich die horizontalen und vertikalen Zeigerkomponenten des Magnetfeldes ausgewertet, so läßt sich nach Art eines Inkrementalgebers zusätzlich die Drehrichtung bestimmen.

Wenn man benachbart zu dem ersten Magnetring 14 auf der Eingangswelle 5 einen zweiten Magnetring 17 anbringt und in dem Sensorgehäuse 11 einen zugehörigen Sensor 18, so kann man mit diesen beiden Magnetringen 14 und 17 und den beiden Sensoren 15 und 18 den Lenkwinkel bestimmen. Dies wird dadurch möglich, daß die beiden Magnetringe 14 und 17 voneinander abweichende Anzahlen von Polpaaren aufweisen. Dadurch kann über die jeweilige Stellung der Pole der beiden Magnetringe 14 und 17 zueinander auf den jeweiligen Lenkwinkel geschlossen werden. Die Lenkwinkelbestimmung mit dieser Methode ist auf einen Bereich von 180° beschränkt. Deshalb muß nach einmaliger Bestimmung der Geradeausfahrtstellung der jeweils zurückgelegte Lenkwinkel durch die Elektronik-Einheit 16 erfaßt und gespeichert werden, um auf den tatsächlichen Lenkwinkel schließen zu können.

Bei dieser Anordnung können Störungen, z. B. ein Stromausfall, zu Fehlern führen. Um solche Fehler auszuschalten, wird auf der Eingangswelle 5 ein dritter Magnetring 20 mit einem zugehörigen Sensor 21 angeordnet. Der Sensor 21 ist wie die anderen Sensoren in dem Sensorgehäuse 11 gehalten. Der Magnetring 20 dagegen ist mit der Eingangswelle 5 über ein Untersetzungsgetriebe 22 verbunden. Bei dem Untersetzungsgetriebe 22 handelt es sich um ein Innenverzahnungsgetriebe nach Art eines "Harmonic Drive"-Getriebes. Das Untersetzungsgetriebe 22 enthält ein außenverzahntes Zahnrad 23 und ein innenverzahntes Hohlrad 24. Das Hohlrad 24 ist in dem Sensorgehäuse 11 drehfest und konzentrisch zu der Achse der Eingangswelle 5 gelagert. Das Zahnrad 23 ist auf einer Buchse 25 um den Betrag einer Exzentrizität "e" exzentrisch zu der Achse der Eingangswelle 5 gelagert. Die Exzentrizität "e" entspricht dem Achsabstand der Verzahnung. Dieses Untersetzungsgetriebe 22 ermöglicht eine absolute Lenkwinkelerfassung über den gesamten Bereich der Lenkhandradumdrehungen.

Der Magnetring 20, der mit dem Zahnrad 23 fest verbunden ist, ist mit zwei Polpaaren versehen. In Kombination mit dem Sensor 21 kann die absolute Winkellage über 90° erfaßt werden. Geht man von einer Lenkung mit insgesamt vier Lenkhandradumdrehungen aus, so bedeutet dies, daß in Verbindung mit dem Untersetzungsgetriebe 22, wie bereits erwähnt, die absolute Lenkwinkellage über den gesamten Lenkungsbereich erfaßt werden kann.

Die Magnetringe 12, 14 und 20 und die Sensoren 13, 15 und 21 bilden zusammen mit der Elektronik-Einheit 16 eine Erfassungseinheit zum kontaktfreien Erfassen der Richtung und der Größe eines an der Eingangswelle 5 auftretenden Lenkmomentes, der Lenkgeschwindigkeit und des Lenkwinkels. Gemessen wird hierbei die Änderung eines Magnetfeldes, die durch eine Bewegung der Magnetringe 12, 14 und 20 hervorgerufen wird.

In einer anderen möglichen Ausführungsform, bei der der Elektromotor 7 nicht auf das Ritzel 3, sondern auf die Zahnstange 10 oder auf die Eingangswelle 5, bzw. eine mit der Eingangswelle 5 verbundene Lenksäule wirkt, kann die Erfassungseinheit an einer anderen Stelle der Hilfskraftlenkung angeordnet werden.

### Bezugszeichen

- 1: Gehäuse
- 2: Ritzelwelle
- 3: Ritzel
- 4: Drehstab
- 5: Eingangswelle
- 6: Schneckengetriebe
- 7.: Elektromotor
- 8: Schneckenrad
- 9: -
- 10: Zahnstange
- 11: Sensorgehäuse
- 12: Magnetring
- 13: Sensor
- 14: Magnetring
- 15: Sensor
- 16: Elektronik-Einheit
- 17: Magnetring
- 18: Sensor
- 19: -
- 20: Magnetring
- 21: Sensor
- 22: Untersetzungsgetriebe
- 23: Hohlrad
- 24: Hohlrad
- 25: Buchse

## Patentansprüche

1. Elektrisch unterstützte Hilfskraftlenkung für Kraftfahrzeuge,
- mit einer Eingangswelle (5), die mit einem Lenkhandrad in Wirkverbindung steht, zur Übertragung eines für das Lenken von zu lenkenden Rädern erforderlichen Lenkdrehmomentes,
- mit einem Ausgangsglied, das mit den zu lenkenden Rädern in Wirkverbindung steht,
- mit einem Servomotor (7), durch den eine Hilfskraft auf die Eingangswelle (5) oder das Ausgangsglied ausgeübt werden kann, wobei die Eingangswelle (5) und das Ausgangsglied über ein drehelastisches Glied derart miteinander verbunden sind, daß zwischen der Eingangswelle (5) und dem Ausgangsglied eine begrenzte Verdrehbewegung möglich ist,
- mit einer Erfassungseinheit zum kontaktfreien Erfassen der Richtung und der Stärke eines auf die Eingangswelle (5) wirkenden Lenkdrehmomentes,
- wobei die Erfassungseinheit je einen mit der Eingangswelle (5) und dem Ausgangsglied verbundenen Impulsgeber und einen Sensor umfaßt,
- wobei die Impulsgeber als Magnetringe (12, 14) ausgebildet sind, die an ihren Umfangsflächen mit magnetischen Nord- und Südpolen in abwechselnder Reihenfolge versehen sind,
- wobei an der Eingangswelle (5) ein zweiter Magnetring (17) angeordnet ist,
- wobei den Sensoren (13, 15) eine Elektronik-Einheit (22) zugeordnet ist,
- **dadurch gekennzeichnet, daß** jeder der beiden ersten Magnetringe (12, 14) eine gleiche Anzahl von Polpaaren aufweist,
- wobei jedem Magnetring (12, 14) ein gehäusefester Sensor (13, 15) zugeordnet ist, durch den sowohl die relative Lage der Magnetringe 12, 14) und damit die relative Lage der Eingangswelle (5) und des Ausgangsgliedes zueinander als auch die Drehgeschwindigkeit der Eingangswelle (5) erfaßt werden,
- wobei der zweiter Magnetring (17) mit einem zugehörigen zweiten Sensor (18) an der Eingangswelle (5) angeordnet ist zur Erfassung des Lenkwinkels,
- wobei der zweite Magnetring (17) und der erste an der Eingangswelle (5) angeordnete Magnetring (14) unterschiedliche Anzahlen von Polpaaren aufweisen,
- wobei durch die den Sensoren (13, 15, 18) zugeordnete Elektronik-Einheit (22) der Lenkwinkel bei mehreren Umdrehungen der Eingangswelle (5) erfaßt werden kann,
- wobei an der Eingangswelle (5) ein dritter Magnetring (20) mit einem zugehörigen dritten Sensor (21) angeordnet ist zur Erfassung des absoluten Lenkwinkels,
- und wobei der dritte Magnetring (20) mit der Eingangswelle (5) über ein Untersetzungsgetriebe (22) verbunden ist.

2. Elektrisch unterstützte Hilfskraftlenkung nach Anspruch 1, **dadurch gekennzeichnet, daß** das Untersetzungsgetriebe (22) nach der Art eines "Harmonic Drive"-Getriebes ausgeführt ist.

3. Elektrisch unterstützte Hilfskraftlenkung nach einem der Ansprüche 1 oder 2, **dadurch gekennzeichnet, daß** der dritte Magnetring (20) mit zwei Polpaaren versehen ist.

4. Elektrisch unterstützte Hilfskraftlenkung nach einem der Ansprüche 1 bis 3, **dadurch gekennzeichnet, daß** der Servomotor ein Elektromotor (7) ist.

## Claims

1. An electrically assisted power steering system for motor vehicles,
- having an input shaft (5) which is operatively connected to a steering wheel, for transmitting a steering torque required to steer the wheels which are to be steered,
- having an output element which is operatively connected to the wheels which are to be steered,
- having a servomotor (7) by means of which an assisting force can be exerted on the input shaft (5) or the output element, the input shaft (5) and the output element being connected to one another by means of a rotationally elastic element in such a way that a limited rotary movement is possible between the input shaft (5) and the output element,
- having a sensing unit for contact-free sensing of the direction and the magnitude of the steering torque acting on the input shaft (5),
- the sensing unit comprising in each case a pulse transmitter, connected to the input shaft (5) and to the output element, and a sensor,
- pulse transmitters being embodied as magnet rings (12, 14) which are provided on their circumferential faces with magnetic north poles and south poles in an alternating sequence,
- a second magnet ring (17) being arranged on the input shaft (5),
- the sensors (13, 15) being assigned an electronic unit (22),
- **characterized in that** each of the two first magnet rings (12, 14) have an equal number of pairs of poles,
- each magnet ring (12, 14) being assigned a sensor (13, 15) which is fixed to a housing and by means of which both the relative position of the magnet rings (12, 14), and thus the relative position of the input shaft (5) and of the output element to one another and the rotational speed of the input shaft (5) are sensed,
- the second magnet ring (17) being arranged with an associated second sensor (18) on the input shaft (5) in order to sense the steering angle,
- the second magnet ring (17) and the first magnet ring (14) which is arranged on the input shaft (5) having different numbers of pairs of poles,
- it being possible for the steering angle to be sensed when there are a plurality of revolutions of the input shaft (5) by means of the electronic unit (22) which is assigned to the sensors (13, 15, 18),
- a third magnet ring (20) being arranged, with an associated third sensor (21), on the input shaft (5) in order to sense the absolute steering angle,
- and the third magnet ring (20) being connected to the input shaft (5) via a step down gear mechanism (22).

2. Electrically assisted power steering system according to Claim 1, **characterized in that** the stepdown gear mechanism (22) is embodied in the manner of a harmonic drive gear mechanism.

3. Electrically assisted power steering system according to one of Claims 1 or 2, **characterized in that** the third magnet ring (20) is provided with two pairs of poles.

4. Electrically assisted power steering system according to one of Claims 1 to 3, **characterized in that** the servomotor is an electric motor (7).

## Revendications

1. Servodirection assistée électriquement pour véhicules à moteur,
- comportant un arbre d'entrée (5) qui se trouve en liaison active avec un volant de direction et destiné à transmettre un couple de changement de direction nécessaire pour la direction des roues à diriger,
- comportant un élément de sortie qui se trouve en liaison active avec les roues à diriger,
- comportant un servomoteur (7) par le biais duquel une force auxiliaire peut être exercée sur l'arbre d'entrée (5) ou sur l'élément de sortie, l'arbre d'entrée (5) et l'élément de sortie étant reliés ensemble par le biais d'un élément rotatif élastique de manière à ce qu'un mouvement rotatif limité soit possible entre l'arbre d'entrée (5) et l'élément de sortie,
- comportant une unité de détection pour la détection sans contact du sens et de l'intensité d'un couple de changement de direction qui agit sur l'arbre d'entrée (5),
- l'unité de détection comprenant à chaque fois un codeur à impulsions relié avec l'arbre d'entrée (5) et avec l'élément de sortie, et un capteur,
- les codeurs à impulsions étant réalisés sous la forme d'anneaux magnétiques (12, 14) dont les surfaces périphériques sont munies de pôles nord et sud magnétiques dans un ordre alterné,
- un deuxième anneau magnétique (17) étant disposé sur l'arbre d'entrée (5),
- un module électronique (22) étant associé aux capteurs (13, 15),
- **caractérisée en ce que** chacun des deux premiers anneaux magnétiques (12, 14) présente un nombre égal de paires de pôles,
- un capteur (13, 15) à boîtier fixe qui permet de détecter à la fois la position relative des anneaux magnétiques (12, 14) et ainsi la position relative de l'arbre d'entrée (5) et de l'élément de sortie l'un par rapport à l'autre ainsi que la vitesse de rotation de l'arbre d'entrée (5) étant associé à chaque anneau magnétique (12, 14),
- le deuxième anneau magnétique (17) avec un deuxième capteur (18) associé étant disposé sur l'arbre d'entrée (5) pour détecter l'angle de direction,
- le deuxième anneau magnétique (17) et le premier anneau magnétique (14) disposé sur l'arbre d'entrée (5) présentant des nombres de paires de pôles différents,
- le module électronique (22) associé aux capteurs (13, 15, 18) permettant de détecter l'angle de direction dans le cas de plusieurs tours de l'arbre d'entrée (5),
- un troisième anneau magnétique (20) avec un troisième capteur (21) associé étant disposé sur l'arbre d'entrée (5) pour détecter l'angle de direction absolu,
- et le troisième anneau magnétique (20) étant relié à l'arbre d'entrée (5) par le biais d'un engrenage de démultiplication (22).

2. Servodirection assistée électriquement selon la revendication 1, **caractérisée en ce que** l'engrenage de démultiplication (22) est réalisé à la manière d'un engrenage « Harmonic Drive ».

3. Servodirection assistée électriquement selon l'une des revendications 1 ou 2, **caractérisée en ce que** le troisième anneau magnétique (20) est muni de deux paires de pôles.

4. Servodirection assistée électriquement selon l'une des revendications 1 à 3, **caractérisée en ce que** le servomoteur est un moteur électrique (7).
